# EUROPEAN PATENT APPLICATION

(11) **EP 4 521 332 A1**
(43) Date of publication of application: **12.03.2025**
(21) Application number: 23799624.4
(22) Date of filing: 27.04.2023
(51) Int. Cl.: G06Q 50/10, G06F 3/16, G11B 20/10, G11B 27/02

(54) **AUDIO OUTPUT SYSTEM AND AUDIO CONTENT OUTPUT DEVICE**

(30) Priority: 06.05.2022 KR 20220056149
(71) Applicant: Kokozi Co., Ltd, Seoul 06023 (KR)
(72) Inventor: PARK, Ji Hee, Seoul 06583 (KR); CHOI, Ki Un, Seoul 06023 (KR)
(74) Representative: Zacco Sweden AB
(86) International application number: PCT/KR2023/005816
(87) International publication number: WO 2023/214741

(57) **Abstract**

An audio output system comprising: a key device including a communication tag; a main device configured to store a first playlist and to output audio content related to the communication tag based on the first playlist; a server configured to store a second playlist and to manage the first playlist based on the second playlist; and a user device configured to update the second playlist by accessing the second playlist, wherein if the second playlist is updated, the server provides a playlist update message to the main device, and wherein the main device updates the first playlist by comparing the first playlist and the updated second playlist with each other.

## Description

### TECHNICAL FIELD

The disclosure relates to an audio output system and an audio content output device, which output audio content for infants and young children. Particularly, the disclosure relates to an audio output system and an audio content output device, which enable a user to easily update a playlist even without separately operating a main device.

### BACKGROUND

The contents set forth in this section merely provide background information on the present embodiment and do not constitute prior art.

With the advancement and miniaturization of electronic devices, such as smartphones and tablets, screen time of users who use digital video devices is gradually increasing. The screen time means time spent sitting or lying down due to the use of the digital video devices, and time for physical and learning activities is excluded therefrom. Such an increase of the screen time may have bad effects on health of adult users, and may have more negative effects on users who are infants and young children. In particular, it may have undesirable effects on cerebral development that users who are infants and young children under 24 months of age are exposed to visual information for a long time, and World Health Organization (WHO) has announced an exposure guide for infants and young children suggesting that infants and young children under 1 year old must not be exposed to an electronic device screen and an electronic device screen exposure for infants and young children of 2 to 5 years old must be limited to 1 hour per day.

On the other hand, auditory stimulation may have beneficial effects on the growth and development of infants and young children who feel and learn about the world through auditory stimulation from the time they are fetuses. Various auditory stimulations have a significant impact on not only the language development but also the development of creativity and imagination of infants and young children. However, although parents desire to convey auditory stimulation to their infants and young children, there is currently a lack of means for capable of stimulating the curiosity of infants and young children who correspond to actual users and providing an easy operating environment to them, and thus the parents eventually provide the auditory stimulation to them together with visual information depending on digital video devices (TVs or smartphones).

Therefore, there has been a need for a system which can provide infants and young children with an easy operating environment in which the infants and young children can select various sounds even without going through parents' digital video devices, and can have beneficial effects on the growth and development of the infants and young children through providing various auditory stimulations to them.

### BRIEF SUMMARY

An object of the present disclosure is to provide an audio output system and an audio content output device, which can change a playlist of a main device with just a simple operation of a user device without any separate operation of the main device.

The objects of the present disclosure are not limited to the objects mentioned above, and other objects and advantages of the present disclosure that have not been mentioned can be understood by the following description and will be more clearly understood by the embodiments of the present disclosure. Further, it will be readily appreciated that the objects and advantages of the present disclosure may be realized by the means set forth in the claims and combinations thereof.

According to some aspects of the disclosure, an audio output system comprises: a key device including a communication tag, a main device configured to store a first playlist and to output audio content related to the communication tag based on the first playlist, a server configured to store a second playlist and to manage the first playlist based on the second playlist, and a user device configured to update the second playlist by accessing the second playlist, wherein if the second playlist is updated, the server provides a playlist update message to the main device, and wherein the main device updates the first playlist by comparing the first playlist and the updated second playlist with each other.

According to some aspects, wherein updating, by the main device, the first playlist by comparing the first playlist and the updated second playlist with each other comprises: determining missing data, which is not included in the first playlist, of audio content included in the second playlist by comparing audio content included in the first playlist and audio content included in the second playlist with each other.

According to some aspects, wherein updating, by the main device, the first playlist by comparing the first playlist and the updated second playlist with each other further comprises: requesting the missing data from the server; being provided with the missing data from the server; and determining the audio content of the first playlist and a playback order of the audio content of the first playlist with reference to the updated second playlist.

According to some aspects, the communication tag comprises identifier information about the key device, and wherein the main device further stores the identifier information related to the first playlist.

According to some aspects, the server provides the update message to the main device by using a messaging protocol based on a message queuing telemetry transport (MQTT).

According to some aspects, the main device comprises a caching module configured to temporarily store playback information about audio content being outputted and identifier information that corresponds to the audio content being outputted.

According to some aspects, the main device is configured to: output the audio content related to the communication tag in case that the key device is loaded, stop outputting of the audio content related to the communication tag in case that the key device is unloaded, and output the audio content in accordance with a playback environment of the audio content at a time when the key device is unloaded by using the caching module in case that the key device is loaded again.

According to some aspects of the disclosure, an audio content output device comprises: a sensing module configured to extract identifier information by detecting a communication tag, a storage module configured to store first identifier information and a first playlist about the first identifier information, an output module configured to output audio content in accordance with the first playlist, and a processing module configured to update the first playlist in accordance with a playlist update message from a server, wherein the processing module is configured to: receive the playlist update message from the server, receive, from the server, a hash value of a second playlist stored in the server, and determine whether to perform an update procedure of the first playlist by comparing a hash value of the first playlist stored in the storage module with the received hash value of the second playlist.

According to some aspects, wherein in case that the hash value of the first playlist and the hash value of the second playlist are different from each other, the processing module is configured to: receive the second playlist from the server, determine missing data, which is not included in the first playlist, of audio content included in the second playlist by comparing the first playlist and the second playlist with each other, be provided with the missing data from the server, and update the first playlist by using the missing data and the second playlist.

According to some aspects, further comprising a caching module configured to temporarily store playback information about audio content being outputted through the output module and the first identifier information.

Aspects of the disclosure are not limited to those mentioned above and other objects and advantages of the disclosure that have not been mentioned can be understood by the following description and will be more clearly understood according to embodiments of the disclosure. In addition, it will be readily understood that the objects and advantages of the disclosure can be realized by the means and combinations thereof set forth in the claims.

The audio output system and the audio content output device according to some embodiments of the present disclosure can stimulate the curiosity of infants and young children, and can provide the infants and young children with an easy operating environment in which the infants and young children can determine various sounds even without going through parents' digital video devices. That is, the audio output system and the audio content output device according to some embodiments of the present disclosure can have beneficial effects on the growth and development of the infants and young children through providing various auditory stimulations to them while minimizing the visual exposure to the digital video devices.

Further, the audio output system and the audio content output device according to some embodiments of the present disclosure has the advantage of being able to easily change the playback order of audio content and the type (playlist) of the audio content by using the user device even without operating the main device separately.

### BRIEF DESCRIPTION OF THE DRAWINGS

FIG. 1 is a diagram for schematic explanation of an audio output system according to some embodiments of the present disclosure.
FIG. 2 is a diagram explaining the constitution of a main device according to some embodiments of the present disclosure.
FIG. 3 is a diagram explaining the constitution of a server according to some embodiments of the present disclosure.
FIG. 4 is a diagram explaining the constitution of a key device according to some embodiments of the present disclosure.
FIG. 5 is a view explaining exemplary implementations of a main device and a key device according to some embodiments of the present disclosure.
FIGS. 6 and 7 are diagrams explaining an initial usage method of an audio output system according to some embodiments of the present disclosure.
FIG. 8 is a diagram schematically explaining a process in which a main device updates a first playlist according to some embodiments of the present disclosure.
FIG. 9 is a diagram explaining a process of updating a playlist of an audio output system according to some embodiments of the present disclosure.
FIG. 10 is a diagram explaining a playlist update procedure according to some embodiments of the present disclosure.

### DETAILED DESCRIPTION OF THE PREFERRED EMBODIMENTS

The terms or words used in the disclosure and the claims should not be construed as limited to their ordinary or lexical meanings. They should be construed as the meaning and concept in line with the technical idea of the disclosure based on the principle that the inventor can define the concept of terms or words in order to describe his/her own inventive concept in the best possible way. Further, since the embodiment described herein and the configurations illustrated in the drawings are merely one embodiment in which the disclosure is realized and do not represent all the technical ideas of the disclosure, it should be understood that there may be various equivalents, variations, and applicable examples that can replace them at the time of filing this application.

Although terms such as first, second, A, B, etc. used in the description and the claims may be used to describe various components, the components should not be limited by these terms. These terms are only used to differentiate one component from another. For example, a first component may be referred to as a second component, and similarly, a second component may be referred to as a first component, without departing from the scope of the disclosure. The term 'and/or' includes a combination of a plurality of related listed items or any item of the plurality of related listed items.

The terms used in the description and the claims are merely used to describe particular embodiments and are not intended to limit the disclosure. Singular forms are intended to include plural forms unless the context clearly indicates otherwise. In the application, terms such as "comprise," "comprise," "have," etc. should be understood as not precluding the possibility of existence or addition of features, numbers, steps, operations, components, parts, or combinations thereof described herein.

Unless otherwise defined, the phrases "A, B, or C," "at least one of A, B, or C," or "at least one of A, B, and C" may refer to only A, only B, only C, both A and B, both A and C, both B and C, all of A, B, and C, or any combination thereof.

Unless being defined otherwise, all terms used herein, including technical or scientific terms, have the same meaning as commonly understood by those skilled in the art to which the disclosure pertains.

Terms such as those defined in commonly used dictionaries should be construed as having a meaning consistent with the meaning in the context of the relevant art, and are not to be construed in an ideal or excessively formal sense unless explicitly defined in the application. In addition, each configuration, procedure, process, method, or the like included in each embodiment of the disclosure may be shared to the extent that they are not technically contradictory to each other.

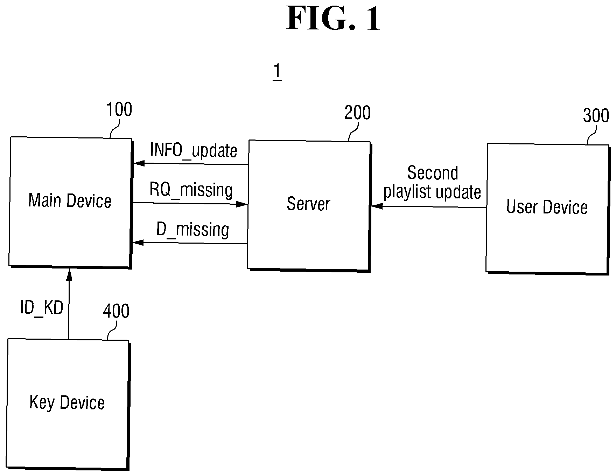

FIG. 1 is a diagram for schematic explanation of an audio output system according to some embodiments of the present disclosure.

Referring to FIG. 1, an audio output system 1 may include a main device 100, a server 200, a user device 300, and a key device 400.

The main device 100 may be coupled to the key device 400, and may output audio content corresponding to the key device 400. The audio content may be constituted for auditory stimulation of infants and young children. According to some embodiments, the audio content may include at least one of an audio track for language learning, such as counting of figures, bilingual repetition, onomatopoeia repetition, and mimetic word repetition; audio content for improving user's imagination and creativity, such as melody, sound theater, and folktales; audio content for enabling a user to perform physical activities through rhythm, such as animal songs and rhythmic children's songs; and audio content in which parents have recorded their voices for user's emotional development. However, these are merely enumerated examples for the audio content, and the embodiments are not limited thereto. The audio content may include various types of audio content for user's auditory stimulation.

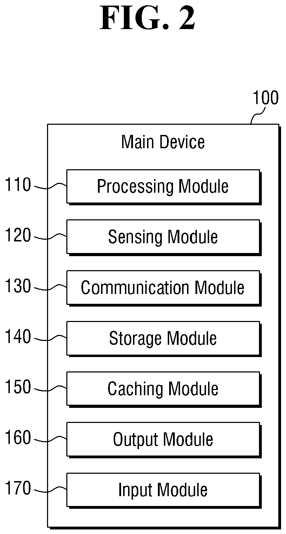

The main device 100 may store and manage a first playlist including one or more pieces of audio content. The first playlist may include one or more pieces of audio content and a playback order of the one or more pieces of audio content. For convenience in explanation, a playlist that is stored in the main device 100 to be managed is defined as the first playlist. A user may update the first playlist stored in the main device 100 by using the user device 300. Updating of the first playlist may include at least one of changing of the audio content included in the first playlist and changing of the playback order of the audio content included in the first playlist. For detailed explanation of the constitution of the main device 100, FIG. 2 is further referred to.

FIG. 2 is a diagram explaining the constitution of a main device according to some embodiments of the present disclosure.

Referring to FIG. 2, the main device 100 may include a processing module 110, a sensing module 120, a first communication module 130, a storage module 140, a caching module 150, an output module 160, and an input module 170.

The processing module 110 may control the overall operation of the main device 100. According to some embodiments, the processing module 110 may verify an identifier of the key device 400 provided from the sensing module 120, or may control the output module 160 to output the audio content corresponding to the identifier. Further, the processing module 110 may control to temporarily store information about the audio content being currently outputted in the caching module 150, or may control to output the audio content in accordance with the information about the audio content that is stored in the caching module 150. In addition, various control operations being performed by the processing module 110 will be able to be fully explained by the following explanation.

The processing module 110 may include at least one of a central processing unit (CPU), a microprocessor unit (MPU), a microcontroller unit MCU, a graphic processing unit (GPU), a neural processing unit (NPU), a microprocessor, a digital signal process, a microcontroller, an application processor (AP), and logic elements that can perform functions similar to the functions of the above units and processors.

The sensing module 120 may recognize a communication tag of the key device 400, and may extract information about an identifier included in the communication tag. The sensing module 120 may provide the extracted information about the identifier to the processing module 110.

The sensing module 120 may include at least one of various sensing means for sensing the communication tag, such as an NFC reader, an RFID reader, a barcode reader, and a QR code reader.

The first communication module 130 may exchange various pieces of data, such as audio content data, instructions data, and messaging data between the main device 100 and the server 200.

The storage module 140 may store therein the audio content that is provided from the server 200, information about the playback order of an audio track included in the corresponding audio content, and information about the identifier corresponding to the audio content. In other words, the storage module 140 may store therein the first playlist and information about the identifier corresponding to the first playlist.

The storage module 140 may store therein, for example, at least one of a read-only memory (ROM), a programmable read-only memory (PROM), an erasable alterable ROM (EAROM), an erasable programmable read-only memory (EPROM), an electrically erasable programmable read-only memory (EEPROM) (e.g., NAND flash memory or NOR flash memory), an ultraviolet erasable programmable read-only memory (UVEPROM), a ferroelectric random access memory (FeRAM), a magnetoresistive random access memory (MRAM), a phase-change random access memory (PRAM), a silicon-oxide-nitride-oxide-silicon (SONOS), a resistive random access memory (RRAM), a nanotube random access memory (NRAM), a magnetic computer storage device (e.g., hard disk, diskette drive, or magnetic tape), an optical disc drive, and a 3D XPoint memory), but the embodiments are not limited thereto.

The caching module 150 may include playback information about the audio content being outputted from the main device 100 and information about the identifier corresponding to the audio content. The playback information about the audio content may include information about what is the audio content being outputted, information about an output volume, information about a playback speed, information about a playback mode, and information about a playback time of the audio content.

According to some embodiments, a user may output the audio content corresponding to the key device 400 by loading the key device 400 on the main device 100. If the key device 400 is unloaded from the main device 100 while the main device 100 is outputting the audio content, the main device 100 may stop outputting of the audio content. In this case, the playback information about the audio content being outputted from the main device 100 and information about the identifier of the key device 400 corresponding to the audio content may be temporarily stored in the caching module 150.

In case that the key device 400 is loaded again, the processing module 110 may compare the information about the identifier of the key device 400 stored in the caching module 150 with information about the identifier of the newly loaded key device 400. If the compared identifiers match each other, the processing module 110 may output the audio content in accordance with the output environment just before the key device 400 is unloaded by using the playback information about the audio content stored in the caching module 150.

As described above, the caching module 150 may temporarily store therein the playback information about the content and the information about the identifier. In this case, the temporarily storing may mean that the stored data is deleted in accordance with specific conditions although the user does not directly delete the data. For example, the caching module 150 may temporarily store the playback information about the audio content and the information about the identifier until a key device 400 that is different from the key device 400 previously unloaded is loaded. As another example, the caching module 150 may temporarily store the playback information about the audio content and the information about the identifier only for a predetermined amount of time. As still another example, the caching module 150 may temporarily store the playback information about the audio content and the information about the identifier until the power of the main device 100 is turned off. However, this explanation is merely exemplary, and the embodiments are not limited thereto.

The caching module 150 may include, for example, at least one of a dynamic random access memory (DRAM), a static random access memory (SRAM), a synchronous dynamic random access memory (SDRAM), and a double data rate SDRAM (DDR SDRAM). However, the present embodiment is not limited thereto.

The output module 160 may output the audio content. Further, the output module 160 may output the state of the main device 100, such as whether to play the audio content or whether to load/unload the key device 400, to outside.

The output module 160 may include, for example, a speaker for outputting the audio content as sound waves and an LED indicator for notifying a loading/unloading state of the key device 400 and/or the playback state of the audio content.

The input module 170 may receive an input signal for controlling the main device 100. For example, the input module 170 may include a volume control unit for controlling the volume of the audio content that is outputted from the main device 100, and a playback state control unit for controlling playback conditions of the audio content, such as playback/stop of the audio content, movement to a next audio track, and fast-forward/rewind of the corresponding audio track.

Referring again to FIG. 1, the server 200 may communicate with the main device 100, and may exchange data, instructions, and messages with the main device 100. Further, the server 200 may communicate with the user device 300, and may exchange data, instructions, and messages with the user device 300.

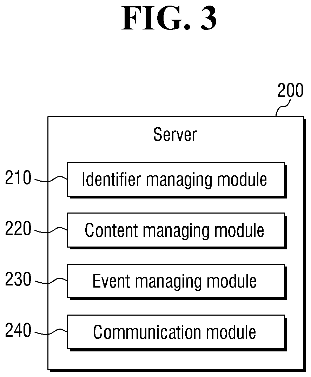

The server 200 may be implemented, for example, by at least one of a workstation, a data center, an internet data center (IDC), a direct attached storage (DAS) system, a storage area network (SAN) system, a network attached storage (NAS) system, and a redundant array of inexpensive disks or a redundant array of independent disks (RAID) system, but the present embodiment is not limited thereto. In order to explain the constitution of the server 200, FIG. 3 is further referred to.

FIG. 3 is a diagram explaining the constitution of a server according to some embodiments of the present disclosure.

Further referring to FIG. 3, the server 200 may include an identifier managing module 210, a content managing module 220, an event managing module 230, and a second communication module 240.

The identifier managing module 210 may verify and manage the validity of an identifier included in the key device 400. The identifier managing module 210 may be provided with an effective identifier list that is an identifier list for the genuine key device 400 in advance. The identifier managing module 210 may perform validity check of the identifier by using the effective identifier list.

According to some embodiments, if the key device 400 that has not been registered in the main device 100 is loaded, the main device 100 may detect the identifier of the corresponding key device 400, and may provide the detected identifier to the identifier managing module 210. The identifier managing module 210 may verify the validity the identifier of the provided key device 400, and may provide the result of the validity verification to the main device 100. In other words, the identifier managing module 210 can be aware of whether the key device 400 is a product produced through a normal method, that is, whether the key device 400 is genuine, through the validity check of the identifier included in the key device 400. The result of the validity check of the identifier may be provided to the content managing module 220, and based on this, the content managing module 220 may determine whether to provide the content corresponding to the identifier.

The content managing module 220 may store and manage the audio content to be outputted from the main device 100 and the playback order of the audio content. In other words, the content managing module 220 may store and manage a second playlist for the audio content and information about the corresponding identifier. The first playlist of the main device 100 may be caused by the second playlist of the content managing module 220. In other words, the main device 100 may be provided with the second playlist from the content managing module 220, and may store the provided second playlist as the first playlist.

The event managing module 230 may record and manage all events occurring in the main device 100. For example, the event managing module 230 may record and manage all logs occurring in the main device 100, such as time when the key device 400 is loaded onto the main device 100, types of audio content having been played in the main device 100, the number of playbacks per audio content, and time when the key device 400 is unloaded from the main device 100. The logs recorded in the event managing module 230 may be used to identify user tendencies in the future.

The second communication module 240 may exchange various pieces of data, such as audio content data, instructions data, and messaging data between the main device 100 and the server 200. Further, the second communication module 240 may exchange various pieces of data, such as audio content data, instructions data, and messaging data between the main device 100 and the user device 300.

Referring again to FIG. 1, the user device 300 may access the second playlist that is managed by the content managing module 220 of the server 200. The user device 300 may update the second playlist of the content managing module 220.

According to some embodiments, the user device 300 may receive a user voice input, and may generate the audio content therefrom. The generated audio content may be used to update the second playlist.

The user device 300 may be applied to, for example, a personal digital assistant (PDA), a portable computer, a web tablet, a wireless phone, a mobile phone, a digital music player, a memory card, or all electronic products capable of transmitting and/or receiving information in a wireless environment.

Further, the user device 300 may include an input unit that receives a user input, a display unit that displays visual information, a communication unit that transmits or receives signals to or from outside, a speaker unit that converts an electric signal into sound waves, a microphone unit that converts a user voice into digital data, and a controller configured to process data, to control respective units inside the user device 300, and to control data transmission/reception between the units.

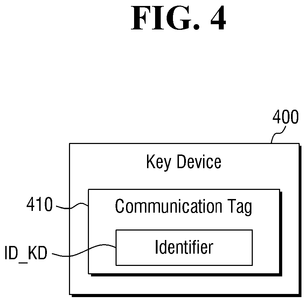

The key device 400 may be loaded onto the main device 100. If the key device 400 is loaded, the main device 100 may output the audio content corresponding to the key device 400. Specifically, the main device 100 may receive identifier information ID_KD included in the key device 400, determine the first playlist corresponding to the identifier information ID_KD, and play the audio content in accordance with the first playlist. In other words, the key device 400 may play a key role in audio content playback. For additional explanation of the key device 400, FIG. 4 is further referred to.

FIG. 4 is a diagram explaining the constitution of a key device according to some embodiments of the present disclosure.

Further referring to FIG. 4, the key device 400 may include a communication tag 410. The communication tag 410 may be a recognition sign including the identifier information ID_KD. The communication tag 410 may be, for example, one of all means capable of including the identifier information ID_KD, such as an NFC tag, an RFID tag, a barcode, and a QR code. The communication tag 410 may be detected by the sensing module 120 of the main device 100.

Referring again to FIG. 1, the operational constitution of an audio output system 1 according to some embodiments of the present disclosure will be briefly described.

The server 200 may communicate with the main device 100. Further, the server 200 may communicate with the user device 300. According to some embodiments, the main device 100 and the server 200, and the server 200 and the user device 300 may be connected to each other via wired/wireless communications, and may exchange data and instructions with each other. For example, the main device 100 and the server 200, and the server 200 and the user device 300 may communicate with each other via wireless communications, such as wireless LAN (WLAN), digital living network alliance (DLNA), wireless broadband (Wibro), world interoperability for microwave access (Wimax), high speed downlink packet access (HSDPA), high speed uplink packet access (HSUPA), IEEE 802.16, long term evolution (LTE), long term evolution-advanced (LTE-A), wireless mobile broadband service (WMBS), and 5G new radio (NR) technologies, and/or via wired communications, such as local area network (LAN) and wide area network (WAN).

The main device 100 may perform communications by using the communication tag 410 of the key device 400, and the main device 100 may recognize the identifier information ID_KD included in the communication tag 410 of the key device 400.

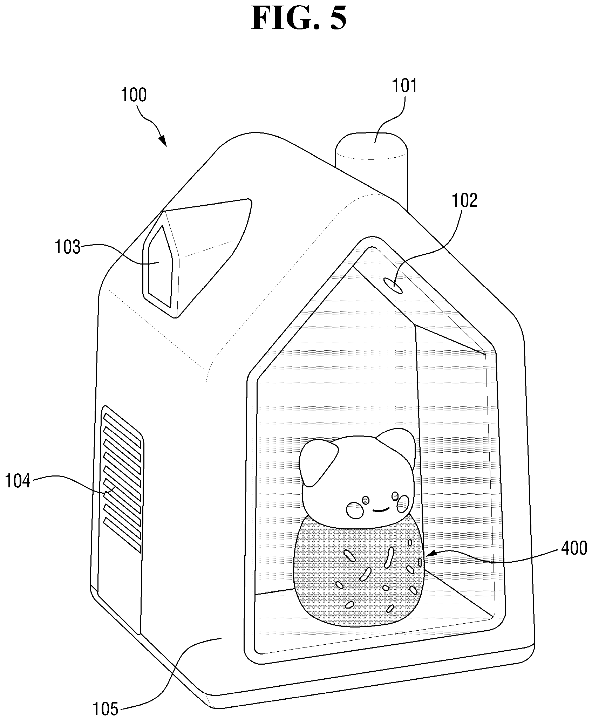

According to some embodiments, for communications with the server 200, the user device 300 may update the second playlist that is managed by the server 200. If the second playlist that is managed by the server 200 is updated, the server 200 may provide update information INFO _update to the main device 100. The update information INFO_update may include a second playlist update message, the second playlist, and a hash of the second playlist. The main device 100 may request missing data RQ_missing from the server 200 based on the update information INFO_update. The missing data may mean the audio content which is included in the second playlist, but is not included in the first playlist. The server 200 may provide the missing data D_missing to the main device 100 based on the requested missing data. The main device 100 may update the first playlist that is managed by the main device 100 by using the provided update information INFO _update and the missing data D _missing. In other words, the main device 100 manages the first playlist based on the second playlist that is managed by the server 200. The detailed description thereof will be made later. Referring to FIG. 5, exemplary implementations of the main device 100 and the key device 400 will be described.

FIG. 5 is a view explaining exemplary implementations of a main device and a key device according to some embodiments of the present disclosure.

Referring to FIG. 5, the main device 100 may include a volume control unit 101, an LED indicator 102, a playback state control unit 103, a speaker unit 104, and a body unit 105.

The volume control unit 101 may control the output volume of the audio content. The LED indicator 102 may indicate the operation state of the main device 100 through color change or lighting signals. For example, the LED indicator 102 may indicate a power-on state of the main device 100 in green, indicate a power-off state in red, and indicate a state where the power is turned on and the key device 400 is loaded in blue. However, these are merely exemplary, and the embodiments are not limited thereto.

The playback state control unit 103 may change the playback state of the audio content being played. For example, the user may perform the change of the audio content, fast forward of the audio content, and rewind of the audio content by controlling the playback state control unit 103. The speaker unit 104 may output (play) the audio content corresponding to the key device 400. The body unit 105 may be a frame on which the volume control unit 101, the LED indicator 102, the playback state control unit 103, and the speaker unit 104 are connected to one another to constitute one main device 100.

The key device 400 may be loaded onto the main device 100. The main device 100 may detect the communication tag inside the key device 400, and may output the audio content corresponding to the key device 400.

According to some embodiments, the main device 100 may have an appearance that can stimulate the curiosity of users who are infants and young children. For example, the main device 100 may be implemented in the shape of a house that includes a space in which the key device 400 is to be loaded. In this case, the volume control unit 101 may be constituted as a chimney of the house, and the playback state control unit 103 may be constituted as an attic window of the house. Further, the LED indicator 102 may be constituted as the lighting of the space in which the key device 400 is loaded, and the speaker unit 104 may be constituted in the shape of a door of the house. The main device 100 in the shape of the house may provide emotional stability and satisfaction to the users who are infants and young children.

Although one key device 400 is illustrated in FIG. 5, the embodiments are not limited thereto. The key device 400 may include a plurality of devices having different appearances. In this case, the key devices 400 having different appearances may correspond to different pieces of audio content. Each of the main device 100 and the key device 400 may include a magnet. Accordingly, in case that the key device 400 is loaded onto the main device 100, the key device 400 and the main device 100 may be fixed by magnetism, but the embodiments are not limited thereto.

The key device 400 may be formed with a size that is large enough for the user who is an infant or a young child to hold with one hand, and may be implemented in an animal shape, in a cute character shape, and in a widely known character shape so as to be able to stimulate the curiosity of the user who is an infant or a young child. Further, for safety of the user who is an infant or a young child, the main device 100 and the key device 400 may be formed with their edges rounded rather than sharp.

Through the above implementations, the user who is an infant or a young child can naturally locate the key device 400 in a loading space of the main device 100 while purely recognizing that the key device 400 resides in the main device 100.

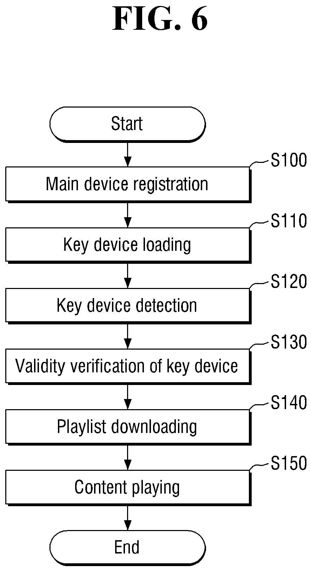

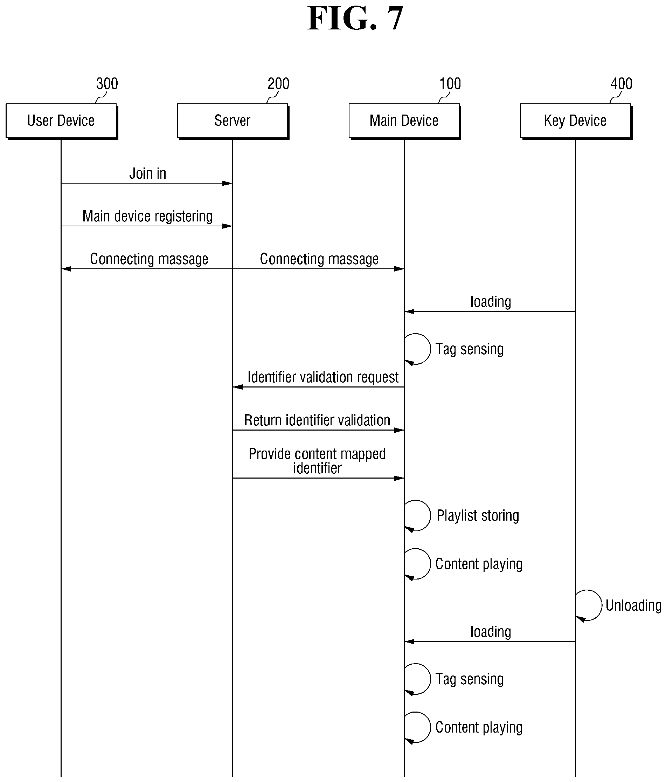

FIGS. 6 and 7 are diagrams explaining an initial usage method of an audio output system according to some embodiments of the present disclosure.

Referring to FIGS. 6 and 7, a user may perform a membership registration procedure to use the audio output system 1 through the user device 300, and may register the user's own main device 100 on the server 200 by linking the main device 100 with the registered account (S100).

The user may register the main device 100 on the server 200 by registering identification information of the main device 100 that the user has on the registered account through the user device 300. The identification information of the main device 100 may include, for example, the serial number of the main device 100. If the main device 100 is registered, the server 200 may provide a connection message to the user device 300 and the main device 100.

However, this is merely one embodiment, and the registration process of the main device 100 is not limited thereto. For example, if the main device 100 and the user device 300 are connected by communications, information about the main device 100 and/or information about the user device 300 are provided to the server 200, and the server 200 can register the main device 100 by using such information.

The key device 400 may be loaded onto the main device 100 (S110). The key device 400 may be loaded onto a predetermined location of the main device 100. The predetermined location of the main device 100 onto which the key device 400 is loaded may be a location where the sensing module 120 of the main device 100 can recognize the communication tag 410 of the key device 400.

The main device 100 can detect the key device 400 (S120). The sensing module 120 of the main device 100 may detect the communication tag 410 included in the key device 400, read the identifier information ID_KD included in the communication tag 410, and provide the read identifier information to the processing module 110 of the main device 100.

The main device 100 may verify the validity of the key device 400 through the server 200 (S130). The processing module 110 of the main device 100 may provide the identifier information ID_KD that is provided from the sensing module 120 to the server 200 through the first communication module 130. Further, the processing module 110 may request the server 100 to verify the validity of the provided identifier information ID_KD. The identifier managing module 210 of the server 200 may verify whether the key device 400 is a normally produced product by using the identifier information ID_KD that is provided from the main device 100. For example, the identifier managing module 210 may verify the validity of the key device 400 depending on whether a pre-stored genuine identifier information list and the identifier information ID_KD that is provided from the main device 100 match each other.

In case that the validity of the key device 400 is verified, the main device 100 may download the playlist including the audio content that corresponds to the key device 400 from the server 200 (S140). In other words, the main device 100 may download the audio content corresponding to the key device 400 and the playback order of the audio content corresponding to the key device 400 from the server 200. The processing module 110 may make the playlist that is provided from the server 200 correspond to the identifier information ID_KD, and may store the provided playlist in the storage module 140 as the first playlist.

The main device 100 may play the audio content that corresponds to the key device 400 (S150). The processing module 110 may control to determine the first playlist that corresponds to the key device 400 by comparing the identifier information ID_KD included in the loaded key device 400 with the identifier information stored in the storage module 140, and may control to output the audio content included in the first playlist to the output module 160 in accordance with the playback order of the audio content included in the first playlist.

In case that the key device 400 is unloaded from the main device 100, and then is loaded again onto the main device 100, the sensing module 120 may recognize the communication tag 410 included in the key device 400 again, and may provide the identification information ID_KD to the processing module 110.

In this case, the processing module 110 may check whether the provided identifier information ID_KD is stored in the storage module 140. In case that information about the provided identifier information ID_KD is in the storage module 140, the processing module 110 may determine the first playlist that corresponds to the identifier information ID_KD from the storage module 140, and thus may output the audio content through the output module 160.

In some embodiments, the processing module 110 may check whether the information about the provided identifier information ID_KD is cached in the caching module 150. In case that the information about the identifier information ID_KD is cached in the caching module 150, the processing module 110 may play the audio content in accordance with the playback environment before the audio content is unloaded by using the caching module 150. In other words, in case that the key device 400 is unloaded, and then is loaded again, the main device 100 may continuously play the audio content in accordance with the playback environment before the key device 400 is unloaded by using the caching module 150.

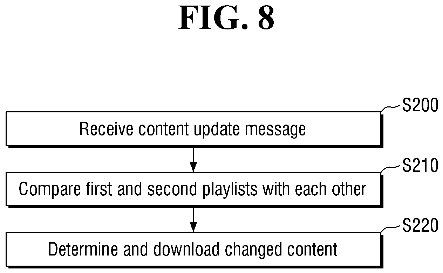

Meanwhile, in case that the information about the provided identifier information ID_KD is not in the storage module 140, the audio output system 1 may repeat the processes of S120 to S150 again. Hereinafter, referring to FIGS. 8 to 10, a process of updating the first playlist stored in the storage module 140 will be described.

FIG. 8 is a diagram schematically explaining a process in which a main device updates a first playlist according to some embodiments of the present disclosure.

Referring to FIG. 8, the main device 100 may receive a content update message from the server 200 (S200). The server 200 may provide the content update message to the main device 100 by using a messaging protocol based on a message queuing telemetry transport (MQTT).

The main device 100 may compare the first playlist stored in the storage module 140 with the second playlist stored in the server 200 (S210).

The main device 100 may determine and download the newly changed audio content through comparison of the first playlist and the second playlist with each other (S220). The main device 100 may update the first playlist by downloading the newly changed audio content and changing the playback order for the audio content in accordance with the second playlist.

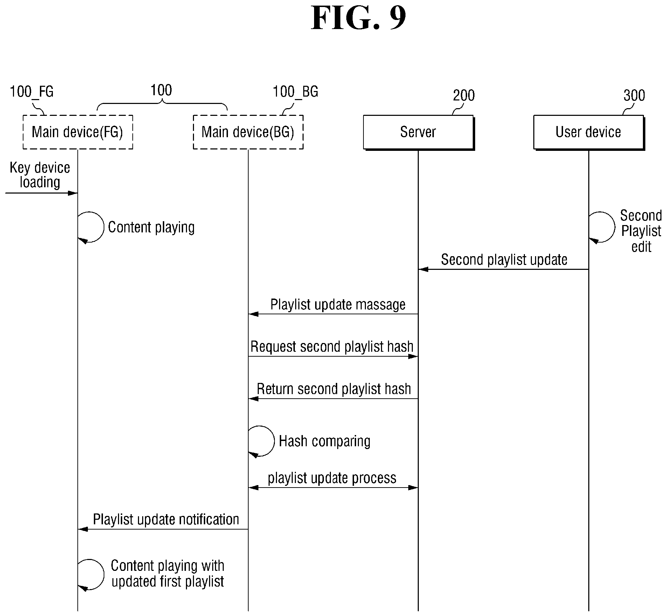

FIG. 9 is a diagram explaining a process of updating a playlist of an audio output system according to some embodiments of the present disclosure.

FIG. 9 illustrates a foreground operation and a background operation of the main device 100 separately.

Referring to FIG. 9, in a foreground 100_FG of the main device, the key device 400 may be loaded. The foreground 100_FG of the main device may play the audio content that corresponds to the key device 400, that is, the audio content that corresponds to the identifier information ID_KD of the key device 400, in accordance with the first playlist.

The user device 300 may check the second playlist stored in the server 200, and may edit the checked second playlist. For example, a user may form a new audio track by proceeding with recording through the user device 300, and may include the formed audio track in the second playlist. As another example, the user may change the playback order of the audio track of the second playlist through the user device 300.

If the second playlist stored in the server 200 is updated by the user device 300, the server 200 may provide a playlist update message to the background 100_BG of the main device. The server 200 may provide the playlist update message to the background 100_BG of the main device by using, for example, a messaging protocol based on a message queuing telemetry transport (MQTT).

The background 100_BG of the main device may receive the playlist update message. The background 100_BG of the main device may request a hash of the second playlist from the server 200 in response to the playlist update message. However, this is merely an embodiment, and the present disclosure is not limited thereto. For example, the server 200 may provide the hash of the second playlist together with the playlist update message to the background 100_BG of the main device.

The background 100_BG of the main device may be provided with the hash of the second playlist, and may compare the hash of the second playlist with the hash of the first playlist stored in the storage module 140.

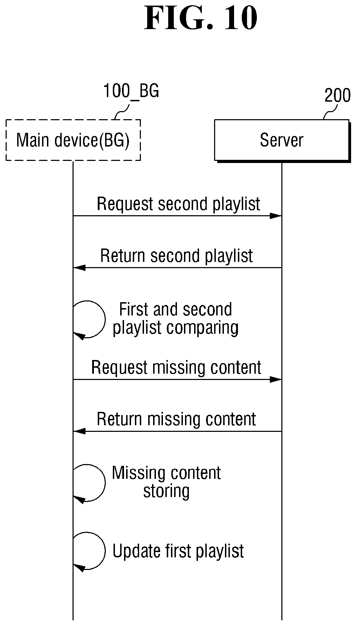

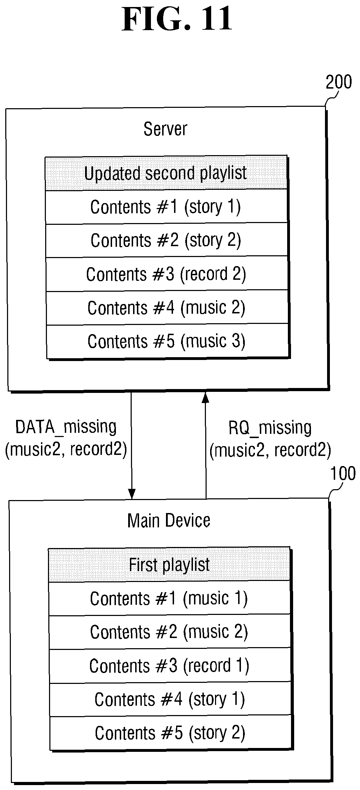

If the hash of the first playlist and the hash of the second playlist are different from each other, that is, if it is determined that the second playlist has been substantially changed, the background 100_BG of the main device may communicate with the server 200, and may perform the playlist update procedure. The detailed description of the playlist update procedure will be made later with reference to FIG. 10.

If the playlist update procedure is completed, the background 100_BG of the main device may notify the foreground 100_FG of the main device that the first playlist is updated, and the foreground 100_FG of the main device may play the audio content by using the updated first playlist.

If the hash of the first playlist and the hash of the second playlist are identical to each other, the first playlist and the second playlist are substantially identical to each other, and the background 100_BG of the main device may end the update process without any separate action.

According to some embodiments of the present disclosure, the user may change and update the playlist by simply using the user device 300. Further, the whole process of updating the first playlist of the main device 100 is performed by the background 100_BG of the main device, and the foreground 100_FG of the main device does not require a separate operation. Accordingly, the user can easily update the first playlist of the main device only by using the user device 300 without separately operating the main device 100.

FIG. 10 is a diagram explaining a playlist update procedure according to some embodiments of the present disclosure.

Referring to FIG. 10, the background 100_BG of the main device may request the second playlist from the server 200. The server 200 may return the second playlist stored in the content managing module 220 to the background 100_BG of the main device.

The background 100_BG of the main device may compare the first playlist stored in the storage module 140 with the second playlist provided from the server 200. The background 100_BG of the main device may determine the missing audio content in the first playlist rather than the second playlist.

The background 100_BG of the main device may request the server 200 to download the missing audio content from the first playlist. The server 200 may provide the requested audio content to the background 100_BG of the main device. The server 200 may directly provide the requested audio content, or may provide a URL capable of downloading the requested audio content.

The background of the main device 100 may update the first playlist by storing the audio content provided from the server 200 and controlling the playback order of the audio content in accordance with the second playlist. The background 100_BG of the main device may store the first playlist that is updated through the above-described process in the storage module 140.

For example, explanation will be made under the assumption that the first playlist is constituted in the order of audio content #1, audio content #2, and audio content #3, and the updated second playlist is constituted in the order of audio content #3, audio content #1, and audio content #4.

The background 100_BG of the main device may check that the first playlist is missing audio content #4 by comparing the first playlist and the second playlist with each other, and may determine the audio content #4 as the missing data D_missing.

Then, the background 100_BG of the main device may request a download for the audio content #4 from the server 200. The server 200 may provide the audio content #4 to the background 100_BG of the main device.

Then, the background 100_BG of the main device may store the audio content #4, update the first playlist so that the first playlist is composed of audio content #3, audio content #1, and audio content #4, and store the updated first playlist in the storage module 140.

While the inventive concept has been particularly shown and described with reference to exemplary embodiments thereof, it will be understood by those of ordinary skill in the art that various changes in form and details may be made therein without departing from the spirit and scope of the inventive concept as defined by the following claims. It is therefore desired that the embodiments be considered in all respects as illustrative and not restrictive, reference being made to the appended claims rather than the foregoing description to indicate the scope of the disclosure.

## Claims

1. An audio output system comprising:
a key device including a communication tag;
a main device configured to store a first playlist and to output audio content related to the communication tag based on the first playlist;
a server configured to store a second playlist and to manage the first playlist based on the second playlist; and
a user device configured to update the second playlist by accessing the second playlist,
wherein if the second playlist is updated, the server provides a playlist update message to the main device, and
wherein the main device updates the first playlist by comparing the first playlist and the updated second playlist with each other.

2. The audio output system of claim 1, wherein updating, by the main device, the first playlist by comparing the first playlist and the updated second playlist with each other comprises:
determining missing data, which is not included in the first playlist, of audio content included in the second playlist by comparing audio content included in the first playlist and audio content included in the second playlist with each other.

3. The audio output system of claim 2, wherein updating, by the main device, the first playlist by comparing the first playlist and the updated second playlist with each other further comprises:
requesting the missing data from the server;
being provided with the missing data from the server; and
determining the audio content of the first playlist and a playback order of the audio content of the first playlist with reference to the updated second playlist.

4. The audio output system of claim 1, wherein the communication tag comprises identifier information about the key device, and
wherein the main device further stores the identifier information related to the first playlist.

5. The audio output system of claim 1, wherein the server provides the update message to the main device by using a messaging protocol based on a message queuing telemetry transport (MQTT).

6. The audio output system of claim 1, wherein the main device comprises a caching module configured to temporarily store playback information about audio content being outputted and identifier information that corresponds to the audio content being outputted.

7. The audio output system of claim 6, wherein the main device is configured to:
output the audio content related to the communication tag in case that the key device is loaded,
stop outputting of the audio content related to the communication tag in case that the key device is unloaded, and
output the audio content in accordance with a playback environment of the audio content at a time when the key device is unloaded by using the caching module in case that the key device is loaded again.

8. An audio content output device comprising:
a sensing module configured to extract identifier information by detecting a communication tag;
a storage module configured to store first identifier information and a first playlist about the first identifier information;
an output module configured to output audio content in accordance with the first playlist; and
a processing module configured to update the first playlist in accordance with a playlist update message from a server,
wherein the processing module is configured to:
receive the playlist update message from the server,
receive, from the server, a hash value of a second playlist stored in the server, and
determine whether to perform an update procedure of the first playlist by comparing a hash value of the first playlist stored in the storage module with the received hash value of the second playlist.

9. The audio content output device of claim 8, wherein in case that the hash value of the first playlist and the hash value of the second playlist are different from each other, the processing module is configured to:
receive the second playlist from the server,
determine missing data, which is not included in the first playlist, of audio content included in the second playlist by comparing the first playlist and the second playlist with each other,
be provided with the missing data from the server, and
update the first playlist by using the missing data and the second playlist.

10. The audio content output device of claim 8, further comprising a caching module configured to temporarily store playback information about audio content being outputted through the output module and the first identifier information.
